# DEMANDE DE BREVET EUROPEEN

(11) **EP 2 669 685 A1**
(43) Date de publication de la demande: **04.12.2013**
(21) Numéro de dépôt: 12170288.0
(22) Date de dépôt: 31.05.2012
(51) Int. Cl.: G01P 1/08, G01P 3/64, G01D 7/08

(54) **Dispositif d'affichage adaptatif pour tachymètre**

(71) Demandeur: Certina SA, 2400 Le Locle (CH)
(72) Inventeur: Bringolf, Martial, 2000 Neuchâtel (CH); Corrêa, David, 2503 Bienne (CH)
(74) Mandataire: Gilligmann, Benoît Philippe

(57) **Abrégé**

Dispositif d'affichage pour tachymètre comprenant un premier module d'affichage utilisant des organes d'affichage analogiques, caractérisé en ce que ledit dispositif d'affichage comprend une pluralité de segments d'affichage juxtaposés pourvus d'échelles de lecture linéaires distinctes.

## Description

La présente invention concerne un dispositif d'affichage pour tachymètre, et plus précisément un tachymètre intégré à une pièce d'horlogerie.

Les tachymètres sont des instruments de mesure permettant de déterminer des vitesses de déplacement d'objets en mouvement. Dans le domaine de l'horlogerie, des tachymètres sont habituellement agencés sur des cadrans ou des lunettes de montre, où des graduations permettent de déterminer une vitesse moyenne pour parcourir une distance prédéterminée, comme par exemple un kilomètre. Une trotteuse, comme par exemple l'aiguille des secondes d'un chronomètre, est actionnée par un poussoir lors du passage au niveau d'un marqueur de distance, typiquement une borne routière, puis arrêtée lors du passage au niveau du marqueur suivant. La vitesse moyenne entre les deux bornes est alors indiquée sur l'échelle graduée en regard de la trotteuse.

La plage de lecture de tels tachymètres est toutefois limitée en raison de l'évolution hyperbolique des valeurs de vitesse pour une distance donnée, qui est fonction de l'inverse du temps. Ainsi lorsque la référence de distance de mesure est déterminée comme étant égale à un kilomètre, il devient difficile d'avoir une lecture précise pour des vitesses supérieures à 180 kilomètres par heure, car s'il faut 20 secondes pour parcourir un kilomètre à cette vitesse, il n'en faut plus que 15 pour le parcourir à 240 kilomètres par heure. Ces 5 secondes d'écart pour une différence de vitesse de 60 kilomètres par heure déterminent une granularité de moins d'une seconde pour 10 kilomètres par heure, ce qui porte préjudice à la précision de la lecture pour de telles vitesses, et encore plus pour des vitesses supérieures. Il n'est par ailleurs pas possible de mesurer des vitesses inférieures à 60 kilomètres par heure sur un tel tachymètre.

Toutefois, si on veut améliorer la précision des tachymètres pour des vitesses élevées pertinentes pour l'utilisateur, comme par exemple des vitesses comprises entre 150 et 300 kilomètres par heure correspondant à des vitesses enregistrées par des voitures courant sur circuit (formule 1, Indycar, voitures de tourisme du type de celles participant aux 24 heures du Mans etc.), le grossissement de l'échelle du tachymètre se fera au détriment des vitesses bases pour lequel le tachymètre sera inadapté.

Pour améliorer la lecture des valeurs à la fois pour des vitesses basses et des vitesses élevées, on connaît des échelles de lecture concentriques correspondant à plusieurs plages de valeurs distinctes pour les vitesses à mesurer. La lecture s'effectue par l'utilisateur en fonction d'une plage pertinente de vitesse qu'il aura présélectionnée et qui conditionnera la vitesse de rotation de la trotteuse. Une telle solution est décrite par exemple dans le document de brevet DE102007005592, où la vitesse de la trotteuse est conditionnée par un mécanisme d'engrenage. La lecture des indications de vitesse y est toutefois malcommode en raison de la superposition des valeurs sur des échelles concentriques qui ne sont pas suffisamment éloignées mutuellement pour éviter toute confusion lors de la lecture.

On connaît par ailleurs des tachymètres à affichage numérique sur des écrans de type LCD ; ce type d'affichage présente toutefois l'inconvénient de n'afficher que des valeurs discrètes sans pouvoir les positionner intuitivement par rapport à l'ensemble de valeurs possibles et avoir ainsi immédiatement un aperçu global comme avec des aiguilles en regard d'une échelle.

Il existe donc un besoin pour un tachymètre exempt de ces limitations.

En particulier, un but de la présente invention est de fournir un tachymètre permettant d'afficher des vitesses de manière analogique sur une plage de valeurs plus élevée.

Ces buts sont atteints notamment grâce à un dispositif d'affichage pour tachymètre comprenant un premier module d'affichage utilisant des organes d'affichage analogiques, **caractérisé en ce que** ledit dispositif d'affichage comprend une pluralité de segments d'affichage juxtaposés pourvus d'échelles de lecture linéaires distinctes.

Un avantage de la solution proposée est de faciliter la lecture des valeurs de vitesse grâce à l'utilisation d'échelles de lecture linéaires, et non plus hyperboliques. Les écarts constants par plage de vitesse prédéfinie, similairement à un compteur de voiture, rendent d'une part la lecture plus intuitive et d'autre part plus précise pour des vitesses élevées.

Un autre avantage de la solution proposée est de pouvoir améliorer la précision de la lecture à la fois pour des vitesses relativement faibles et pour des vitesses élevées, sans risque de confusion pour l'utilisateur.

Des exemples de mise en oeuvre de l'invention sont indiqués dans la description et illustrés par les figures annexées dans lesquelles:
- la figure 1 illustre une montre pourvue d'un dispositif d'affichage pour tachymètre selon un mode de réalisation préférentiel de l'invention;
- la figure 2 illustre un schéma fonctionnel d'un tachymètre selon un mode de réalisation préférentiel de l'invention.

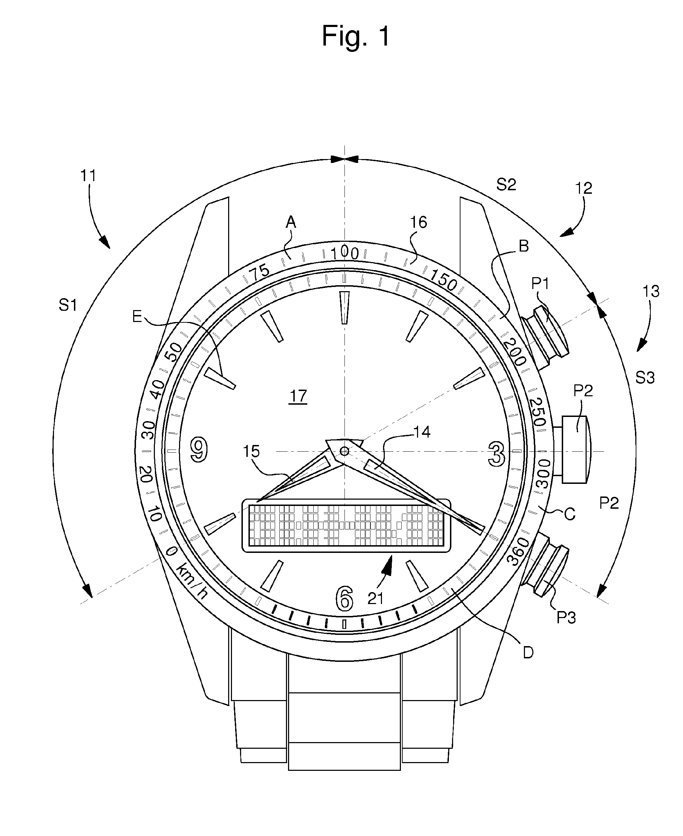

Sur la figure 1 on peut distinguer une montre classiquement pourvue d'une aiguille des heures 15, d'une aiguille des minutes 14 et d'un cadran 17 surmonté d'une lunette 16. La montre comprend également trois poussoirs P1, P2 et P3 saillants hors de la carrure afin de faciliter leur manipulation. Leur fonction sera expliquée plus loin. Sur la lunette 16 de forme circulaire sont disposés 3 segments d'affichage 11,12,13 comprenant chacun une respectivement une première série A de repères, une deuxième série B de repères, et une troisième série C de repères définissant chacun des échelles de valeurs linéaire, c'est-à-dire avec un espacement constant entre chacune des graduations ou des valeurs numériques indiquées, correspondant à écart de valeurs régulier. Une quatrième série D de repères, située en périphérie du cadran, permet de faciliter la lecture de l'heure, dans le mode d'affichage de l'heure courante, grâce une disposition en regard de l'extrémité de l'aiguille des minutes 14. Cette quatrième série D de repères comprend classiquement 60 graduations, correspondant chacune à une minute. La montre comprend par ailleurs une autre série E de 12 repères alphanumériques, alternant des graduations et des valeurs numériques pour faciliter la lecture de l'heure avec une disposition également en périphérie du cadran en regard de l'extrémité de l'aiguille des heures 15.

Selon un mode de réalisation préférentiel de l'invention, les premiers, deuxième et troisième segments d'affichage 11,12,13 juxtaposés sur la lunette 16 et les aiguilles (c'est-à-dire l'aiguille des heures 15 et des minutes 14) sont utilisés conjointement comme module d'affichage analogique pour un tachymètre, qui serait donc ici intégré à une montre. Le dispositif d'affichage du tachymètre selon l'invention comprend de préférence un deuxième module d'affichage numérique utilisant par exemple un écran LCD 21 comme celui agencé sur la partie inférieure du cadran 17 de la figure 1. Selon le mode de réalisation préférentiel de dispositif d'affichage pour tachymètre illustré sur cette figure, les modules d'affichage analogique et numérique sont totalement disjoints et peuvent par conséquent être utilisés de manière simultanée et complémentaire. En effet, le positionnement des aiguilles au repos dans le mode d'affichage du tachymètre montre l'aiguille des heures 15 à 8 heures sur le cadran 17, ce qui correspond à une vitesse de 0 km/h sur l'échelle du tachymètre, et l'aiguille des minutes 14 à 4 heures sur le cadran 17, ce qui correspond à la vitesse maximale de 360 km/h selon le dispositif d'affichage illustré. Chacune des aiguilles peut se déplacer sur trois secteurs angulaires S1, S2,S3 correspondant chacun respectivement au premier segment d'affichage 11, deuxième segment d'affichage 12 et troisième segment d'affichage 13, et qui s'étendent sur une première plage angulaire de 120 degrés, de 8 heures à midi sur le cadran 17, et deux plages angulaires de 60 degrés, respectivement de midi à deux heures et de deux à quatre heures sur le cadran 17. Elles ne se déplacent toutefois jamais dans le secteur angulaire de 120 degrés de la partie inférieure du cadran 17, entre 4 et 8 heures, c'est-à-dire l'espace situé sous les deux aiguilles sur la figure 1.

Bien que d'autres dispositions soient possibles pour des modules d'affichage analogiques et numériques sans risque de chevauchement ou de superposition de valeurs, la disposition particulière du dispositif d'affichage pour tachymètre de la figure 1 présente l'avantage d'émuler un environnement familier pour l'utilisateur, à savoir un compteur de voiture, qui utilise également souvent un affichage analogique à aiguille sur un secteur angulaire similaire d'environ 240 degrés pour la lecture de la vitesse instantanée, ainsi qu'un affichage dual avec module numérique pour l'affichage de données complémentaires, de type tableau de bord dans la partie inférieure du cadran. Cette émulation d'un environnement familier pour la lecture d'une vitesse rend cette lecture encore plus intuitive pour l'utilisateur lorsqu'il consulte le tachymètre, par exemple directement sur sa montre-bracelet.

Cette similitude avec un compteur de voiture est accentuée par le fait que chacun des segments d'affichage 11,12,13 utilise des échelles de lecture linéaires sur chacun des secteurs angulaires S1,S2 et S3 correspondants. Bien que les échelles de lecture choisies soient distinctes pour des plages de valeurs de vitesse prédéfinies, ici de 0 à 100 km/h pour le premier segment 11, 100 à 200 pour le 2^{e} segment 12, et enfin 200 à 360 pour le 3^{e} segment, les segments d'affichage sont contigus, c'est-à-dire juxtaposés les uns aux autres dans le sens de la lecture, ici le sens horaire, de telle sorte qu'il n'y ait aucune interruption sur l'intégralité du compteur et que le confort de lecture soit optimal pour l'utilisateur, pour lequel un changement de segment n'est pas perceptible lors de l'affichage.

Selon le mode de réalisation préférentiel du dispositif d'affichage pour tachymètre selon l'invention, les premiers et deuxièmes segments d'affichage 11 et 12 utilisent des premières et deuxièmes séries de repères A et B alternant des valeurs numériques et de graduations qui se superposent radialement à celles de la quatrième série D de repères, c'est-à-dire les graduations des minutes de l'heure courante, afin de rendre la lecture des valeurs de vitesse encore plus aisée. L'écart angulaire de 6 degrés entre chacun des repères d'affichage est identique à celui des minutes sur le cadran et il est ainsi très facile de déduire la précision de chacun de ces secteurs angulaires: un peu moins d'un kilomètre heure par degré pour le premier segment 11 (c'est-à-dire 5 km/h pour chacune minute du cadran 17, soit 6 degrés), et le double pour le deuxième secteur 12 pour lequel 10 km/h correspondent à chacune minute du cadran 17. Grâce à une telle disposition des graduations et du choix des différentes échelles sur chaque segment il est non seulement possible d'avoir une lecture aisée des valeurs de vitesse sur l'intégralité de la plage s'étendant de 0 à 200 km/h, avec d'une part la possibilité d'afficher des vitesses inférieures à 60km/h et d'autre part d'afficher ces valeurs de vitesse avec une précision d'affichage significativement meilleure par rapport à un tachymètre classique sans remettre en cause la précision pour des vitesses plus élevées.

Pour des valeurs de vitesse encore supérieures, l'échelle du troisième segment 13 a été choisie pour représenter une plage de vitesse s'étalant sur 160km/h, entre 200km/h et 360km/h sur un secteur angulaire de 60 degrés, soit des graduations ou des repères représentant 10km/h d'écart tous les 3.75 degrés, soit environ tous les 2/3 de minute sur le cadran 17. La série des troisièmes repères C présente ainsi une sensibilité de près de 3 km/h par degré (plus exactement égale à 160/60), et le rapport avec la sensibilité de la série des premiers repères est légèrement supérieur à 3 (3.2 exactement). Ce rapport maximal entre les sensibilités extrêmes des différentes échelles linéaires choisies dans le cadre de l'invention est tout à faire acceptable comparé aux valeurs hyperboliques usuelles sur des mêmes plages de valeurs de vitesse, pour lesquelles un tel rapport est largement supérieur à 10 pour des plages de vitesses comparables: sur un tachymètre classique basé sur la mesure du temps pour parcourir un kilomètre, la sensibilité est en effet de 24km/h par seconde entre 240 et 360km/h (un kilomètre étant effectué respectivement entre 10 et 15 secondes), tandis qu'elle est de 1,5 entre 60 et 90 km/h (un kilomètre étant effectué respectivement entre 60 et 40 secondes), soit un rapport de 16 pour des plages de valeurs incluses dans celles correspondant aux premières et troisièmes échelles de l'invention, pour lesquelles ce rapport est environ 5 fois plus faible. On peut par conséquent constater que le dispositif d'affichage pour tachymètre selon l'invention permet d'améliorer la précision de lecture, à la fois pour des vitesses basses et élevées, sur plage très grande s'étalant jusqu'à des vitesses qui peuvent être atteintes par des voitures du type formule 1.

L'homme du métier comprendra que la sensibilité et le nombre des segments d'affichage ont été adaptés pour des vitesses bornées par celles atteintes par les voitures les plus rapides évoluant sur circuit aujourd'hui, mais que des sensibilités et un nombre de secteurs différents pourraient être envisagés en fonction du type de voiture utilisée et des vitesses normalement atteintes par cette voiture.

Selon le mode de réalisation préférentiel illustré par la figure 1, le dispositif d'affichage du tachymètre est intégré à une montre, de telle sorte que le premier organe d'affichage 14 correspond à l'aiguille des minutes et ledit deuxième organe d'affichage 15 correspond à l'aiguille des heures. Selon un mode de réalisation alternatif, on pourrait toutefois envisager un affichage analogique effectué à l'aide d'un curseur se déplaçant le long d'une échelle rectiligne comprenant différents segments d'affichage juxtaposés de sensibilité différente, ou encore un mobile d'affichage, comme par exemple un disque, pourvu d'indications de vitesse sur sa périphérie, et qui seraient lues en regard d'un repère fixe. L'avantage du mode de réalisation préférentiel décrit ci-dessus est qu'il permet de réutiliser avantageusement des éléments d'affichage classiques pour une intégration aisée dans une montre, de préférence une montre bracelet.

Un autre avantage du mode de réalisation préférentiel illustré à la figure 1 est qu'il permet d'afficher simultanément au moins deux informations distinctes à l'aide des deux organes d'affichage analogiques, en l'occurrence l'aiguille des minutes 14 et l'aiguille des heures 15. De préférence l'aiguille des minutes 14 peut être utilisée pour afficher une vitesse instantanée (Vinst), dont la lecture sera rendue très précise grâce à la proximité de l'extrémité de l'aiguille en regard des segments d'affichage, tandis que l'aiguille des heures pourra être utilisée pour afficher une vitesse maximale (Vmax) sur une série de mesure, pour laquelle la lecture sera certes un peu moins facilement lisible, mais permettra d'indiquer très intuitivement à l'utilisateur du tachymètre sa vitesse relative par rapport à cette vitesse maximale sur une série de mesures, c'est-à-dire d'avoir immédiatement un aperçu de l'écart entre sa vitesse instantanée et la vitesse maximale qu'il a déjà atteinte grâce à la lecture croisée de ces deux informations. Plus généralement, on peut envisager l'affichage de n'importe quelle information additionnelle de vitesse, ayant de préférence une synergie avec celle de la vitesse instantanée, comme par exemple une vitesse moyenne, ou la dernière vitesse mesurée (par exemple pour permettre à un utilisateur de comparer des vitesses sur des mêmes portions de parcours) à l'aide d'un deuxième organe d'affichage, de préférence analogique comme l'aiguille des heures 15 lorsque le premier organe d'affichage 14 est l'aiguille des minutes pour accentuer les synergies et le caractère intuitif de la lecture.

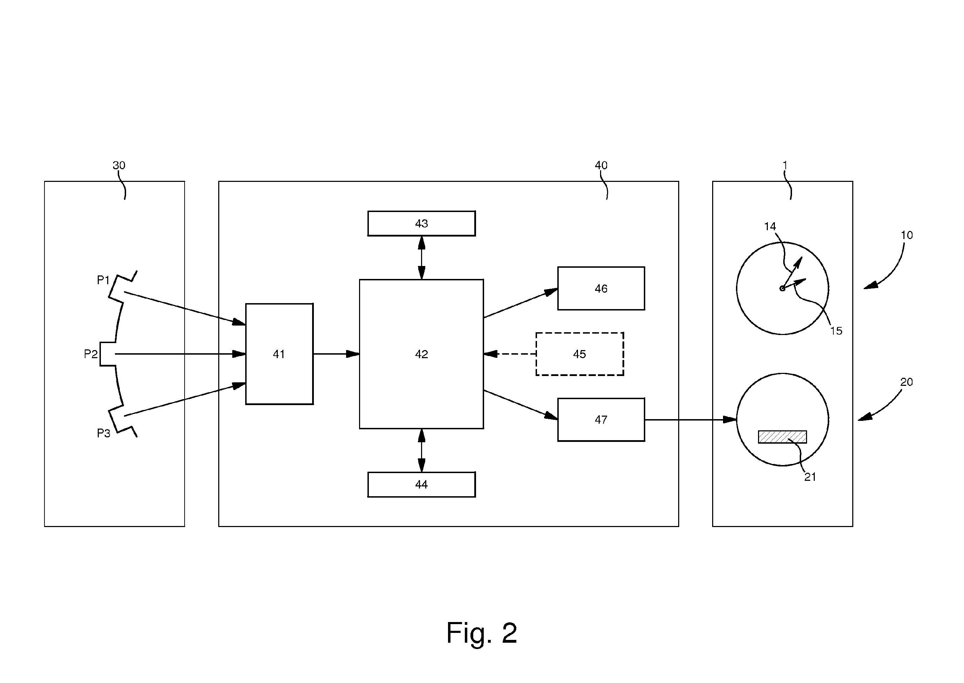

Selon un mode de réalisation préférentiel de l'invention, le dispositif d'affichage pour tachymètre est intégré à une montre tachymètre comportant des moyens moteur contrôlés électroniquement pour actionner les organes d'affichage analogiques, comme par exemple l'aiguille des minutes 14 et l'aiguille des heures 15, de telle sorte qu'elles affichent respectivement la vitesse instantanée (Vinst) et la vitesse maximale (VMax) en regard des segments d'affichage 11,12,13 qui sont de préférence situés sur la lunette 16 d'une montre, mais pourraient également, selon une variante, être situés par exemple en périphérie du cadran 17. Un tel agencement présenterait l'avantage de libérer de l'espace sur la lunette 16 pour d'autres types d'affichage ou encore d'autres fonctions, comme par exemple l'intégration d'une interface de commande tactile. La figure 2 illustre un schéma fonctionnel d'un tel tachymètre, qui comporte une interface de commande 30 formé par trois poussoirs P1,P2,P3 ainsi qu'un circuit électronique 40 en plus du dispositif d'affichage 1 formé par un premier module d'affichage analogique 10 et un deuxième module d'affichage numérique 20.

Le circuit électronique 40 comprend de préférence un module capteur 41 (auquel un module compteur est éventuellement asservi) pour détecter et comptabiliser les pressions effectuées sur les différents poussoirs, ainsi qu'un circuit contrôleur 42, comprenant par exemple un microcontrôleur, connecté d'une part à un circuit de division du temps relié à un résonateur pour fournir une base de temps 45, et d'autre part à un premier circuit de commande 46 des moteurs pour les organes d'affichage analogiques et un deuxième circuit de commande 47 de l'écran LCD 21 pour le module d'affichage numérique 20. Le circuit contrôleur 42 est également connecté à une première zone de mémoire 43 lui permettant d'effectuer les calculs relatifs au mode tachymètre et une deuxième zone mémoire 44, prévue pour stocker notamment des mesures de vitesse.

Des informations temporelles sont produites par le circuit contrôleur 42 de préférence pour assurer les fonctions du mode horaire et les fonctionnalités relatives au mode du tachymètre.

Le circuit contrôleur 42 reçoit des signaux du module capteur 41 pour la navigation et le réglage dans différents menus. La navigation d'un menu à l'autre s'effectue par exemple à l'aide de pressions successives sur le poussoir central P2. Une fois le menu tachymètre choisi, qui s'affiche par une indication sur l'écran LCD 21, une pression longue sur le premier poussoir P1, permet de faire clignoter l'affichage digital d'une longueur de référence fixée par exemple à 100 mètres sur l'écran LCD 21. Des pressions respectivement sur le premier poussoir P1 ou le troisième poussoir P3 permettent d'ajuster cette valeur de référence entre 1 et 99999 mètres, et une pression sur le poussoir central P2 permet de confirmer le réglage. Afin de faciliter le réglage de la longueur de référence, le circuit contrôleur 42 pourra être de préférence agencé de telle sorte que le réglage s'effectue séquentiellement chiffre par chiffre, avec validation de chaque chiffre par une pression sur le poussoir central P2, plutôt que par des pressions longues sur les premiers et troisièmes poussoirs P1 & P3. La valeur de longueur de référence utilisée pour les mesures de vitesse est ensuite de préférence stockée dans la première zone de mémoire 43, de préférence non volatile et reprogrammable (type flash ou SSD) et sert de base pour le calcul d'une vitesse instantanée (Vinst), mesurée entre deux pressions successives sur le premier poussoir P1, dont la valeur est stockée dans la deuxième zone de mémoire 44 pour un affichage ultérieur éventuel.

De préférence, une série de mesure de vitesses instantanées peut comporter jusqu'à 20 mesures, qui peuvent être consultées via un affichage digital sur l'écran LCD 21 après une première pression sur le 3^{e} poussoir P3 et des pressions ultérieures pour consulter successivement toutes les valeurs mémorisées. Une pression longue sur P3 permet une remise à zéro complète et l'effacement des données stockées dans la deuxième zone de mémoire 44.

Après chaque mesure, démarrée par une pression sur le premier poussoir P1 et stoppée par une deuxième pression sur le même poussoir P1, le circuit contrôleur 42 envoie des signaux d'activation au circuit de commande des moteurs 46 pour positionner l'aiguille des minutes 14 depuis sa position de repos à 4 heures sur le cadran 17, visible sur la figure 1, en regard de la valeur qu'il a calculée. Lors de la première mesure, l'aiguille des heures 15 est également positionnée par le circuit de commande des moteurs 46, sur la même valeur que l'aiguille des minutes 14, mais elle reste immobile jusqu'à la mesure suivante et n'est superposée à l'aiguille des minutes 14 que si cette dernière atteint une valeur supérieure à toutes celles des mesures précédentes. Les aiguilles des heures 15 et des minutes 14 sont indépendantes et servent, selon un mode de réalisation préférentiel, également à afficher l'heure et les minutes d'autres fuseaux horaires. Elles sont de préférence en aluminium afin de rester légères pour correspondre aux spécifications des moteurs.

L'intérêt du tachymètre selon le mode de réalisation préférentiel décrit est qu'il est adaptatif, c'est-à-dire qu'il que le calcul des valeurs de vitesse par le biais du circuit électronique 40 permet d'une part de choisir des échelles de lecture linéaires distinctes, ajustées en fonction de différentes plages de vitesse prédéterminées pour lesquelles la lecture doit être précise et intuitive au préalable; l'affichage s'effectue ensuite sans aucune discontinuité entre les différents segments d'affichage et de façon totalement transparente pour l'utilisateur. D'autre part, il est possible à l'utilisateur de déterminer librement la distance de référence pour les mesures de la vitesse, par exemple en fonction du parcours sur lequel l'utilisateur se trouve, ce qui en améliore la flexibilité d'usage.

## Revendications

1. Dispositif d'affichage (1) pour tachymètre comprenant un premier module d'affichage (10) utilisant des organes d'affichage analogiques, **caractérisé en ce qu'**il comprend une pluralité de segments d'affichage (11,12,13) juxtaposés pourvus d'échelles de lecture linéaires distinctes.

2. Dispositif d'affichage (1) pour tachymètre selon la revendication 1, **caractérisé en ce que** lesdits organes d'affichage analogiques comprennent un premier organe d'affichage (14) pour l'indication de la vitesse instantanée (Vinst) et un deuxième organe d'affichage (15) pour l'indication d'une vitesse maximale (VMax) pour une série de mesures.

3. Dispositif d'affichage (1) pour tachymètre selon la revendication 2, **caractérisé en ce que** ledit premier organe d'affichage (14) correspond à l'aiguille des minutes et ledit deuxième organe d'affichage (15) correspond à l'aiguille des heures.

4. Dispositif d'affichage (1) pour tachymètre selon l'une des revendications précédentes, **caractérisé en ce que** lesdits segments d'affichage (1,2,3) sont agencés sur une lunette (16) et déterminent des secteurs angulaires (S1,S2,S3) contigus s'étendant sur une plage angulaire d'au maximum 240 degrés au total.

5. Dispositif d'affichage (1) pour tachymètre selon la revendication 4, comprenant respectivement des première, deuxième et troisième séries (A,B,C) de repères équidistants répartis sur chacun desdits segments d'affichage (11,12,13), chacun desdits repères déterminant une sensibilité variable correspondant à chacun desdits secteurs angulaires (S1,S2,S3), **caractérisé en ce que** la sensibilité minimale est inférieure à 3 km/h par degré et la sensibilité maximale est d'environ 1 km/h par degré.

6. Dispositif d'affichage (1) pour tachymètre selon la revendication 5, **caractérisé en ce qu'**au moins certains desdites premiers, deuxièmes et/ou troisièmes séries (A,B,C) de repères sont superposés à une quatrième série de repères (D) correspondant aux graduations des minutes de l'heure courante.

7. Dispositif d'affichage (1) pour tachymètre selon l'une des revendications 4 à 6, **caractérisé en ce qu'**il contient par ailleurs un deuxième module d'affichage (20) comprenant des moyens d'affichage numériques (7) disposés sur un cadran (17) hors desdits secteurs angulaires (S1,S2,S3).

8. Tachymètre pourvu d'un dispositif d'affichage (1) selon l'une des revendications 1 à 7, comprenant par ailleurs une interface de commande (30) et un circuit électronique (40) pour l'activation desdits organes d'affichage analogiques.

9. Tachymètre selon la revendication 8, **caractérisé en ce que** ladite interface de commande (30) comprend une pluralité de poussoirs (P1,P2,P3) et permet de régler une distance de référence pour les mesures.
